# EUROPÄISCHE PATENTSCHRIFT

(11) **EP 2 945 788 B1**
(45) Veröffentlichungstag und Bekanntmachung des Hinweises auf die Patenterteilung: **12.09.2018**
(21) Anmeldenummer: 14701933.5
(22) Anmeldetag: 15.01.2014
(51) Int. Cl.: B29B 17/02, D21D 1/22

(54) **VORRICHTUNG UND VERFAHREN ZUM ENTFERNEN VON VERUNREINIGUNGEN AUF KUNSTSTOFFSCHNIPSELN**
DEVICE AND METHOD FOR REMOVING IMPURITIES FROM SHREDDED PLASTIC
DISPOSITIF ET PROCÉDÉ D'ÉLIMINATION D'IMPURETÉS PRÉSENTES SUR DES COPEAUX DE MATIÈRE PLASTIQUE

(30) Priorität: 16.01.2013 DE 102013000593
(43) Veröffentlichungstag der Anmeldung: 25.11.2015
(73) Patentinhaber: CVP Clean Value Plastics GmbH, 20099 Hamburg (DE)
(72) Erfinder: GERCKE, Alexander, 23843 Bad Oldesloe (DE); HOFMANN, Michael, 20146 Hamburg (DE); WERMTER, Carsten, 20149 Hamburg (DE)
(74) Vertreter: Hauck Patentanwaltspartnerschaft mbB
(86) Internationale Anmeldenummer: PCT/EP2014/050680
(87) Internationale Veröffentlichungsnummer: WO 2014/111412

(56) Entgegenhaltungen:
- EP-A1- 2 077 352
- DE-A1-102005 013 693

## Beschreibung

Die Erfindung betrifft eine Vorrichtung zum Entfernen von Verunreinigungen auf Kunststoffschnipseln, umfassend mindestens einen ersten Reinigungskörper mit einer eine erste Reinigungsfläche bildenden zumindest abschnittsweise kegelförmigen und/oder zylindrischen Außenfläche und mindestens einen zweiten Reinigungskörper mit einer eine zweite Reinigungsfläche bildenden zumindest abschnittsweise kegelförmigen und/oder zylindrischen Innenfläche, wobei der zweite Reinigungskörper dazu ausgebildet ist, den ersten Reinigungskörper aufzunehmen, wobei die Reinigungsflächen einander gegenüberliegen und zwischen sich einen Reinigungsspalt begrenzen, weiter umfassend eine Antriebseinrichtung, mit der zumindest einer der Reinigungskörper um seine Längsachse drehbar ist und eine Zuführeinrichtung, mit der Kunststoffschnipsel in den Reinigungsspalt zuführbar sind. Die Erfindung betrifft außerdem ein Verfahren zum Entfernen von Verunreinigungen auf Kunststoffschnipseln mit einer derartigen Vorrichtung.

Kunststoffabfälle, beispielsweise PET-Getränkeflaschen, Blisterverpackungen aus PET (tiefgezogene PET-Folien), Kunststoffabfälle aus Polyolefinen oder ähnliches, müssen im Zuge eines Recyclings gereinigt werden. Dabei sind sehr hohe Qualitätsanforderungen zu erfüllen. Zulässige Verunreinigungen bewegen sich im ppm Bereich. Für die Reinigung werden die Kunststoffabfälle zunächst zu Kunststoffschnipseln, insbesondere sogenannten Kunststoffflakes, zerkleinert. Voraussetzung für den Reinigungsprozess und die kontinuierliche Beschickung einer Reinigungsanlage sind optimal vorzerkleinerte Kunststoffschnipsel. Insbesondere sollten die Kunststoffschnipsel möglichst gleichmäßig mit einem geringen Feinanteil erzeugt werden. Es ist bekannt, hierfür einen Schredder (Rotor mit Messern und Gegenmessern und Siebkorb) oder andere Zerkleinerungsaggregate wie beispielsweise Schneidmühlen einzusetzen. Über den Lochdurchmesser in dem Siebkorb wird die erzeugte Flakegröße beeinflusst. Die Abtrennung von Metallen von den Kunststoffabfällen erfolgt in einer Vorsortierung mittels Magnet- und Wirbelstromabscheidern. Es ist Stand der Technik, dass vor der Zerkleinerung der Kunststoffabfälle eine Sortierung nach Farben und/oder Kunststoffarten erfolgt. Dies ist aufgrund der Verschmutzung der Kunststoffabfälle jedoch mit Einschränkungen verbunden, da die Erkennungsrate bei verschmutzen Stoffen geringer als bei sauberen ist. Weiterhin müssen bei einer Sortierung vor der Reinigung dann mehrere Waschstraßen betrieben werden, um die einzelnen Fraktionen zu reinigen. Es ist jedoch auch möglich, zunächst Kunststoffabfälle unterschiedlicher Farben und/oder unterschiedlicher Kunststoffarten vorzuzerkleinern, anschließend zu reinigen und die Sortierung nach Farben und/oder Kunststoffarten erst am Ende des Prozesses mittels einer Farberkennung bzw. einer NIR, Laser, oder Röntgenspektroskopie durchzuführen. Dies kann in einem Auflichtprozess und/oder einem Durchlichtprozess mit geeigneter optischer Detektoreinrichtung (Kamera) erfolgen.

Beim Recycling von Kunststoffflakes, insbesondere PET-Flakes, müssen folgende Anforderungen erfüllt werden:
1. Abtrennen von Folien- und Zellstoffetiketten
2. Abtrennen der Zellstoffe
3. Reinigung der Flakes von Verschmutzungen durch Inhaltsstoffe (beispielsweise Getränkereste)
4. Reinigung der Flakes von anhaftenden Verschmutzungen (beispielsweise Klebstoffe von Etiketten)
5. Abtrennen von Metallen (beispielsweise Weißblech und Aluminiumdosen)
6. Abtrennen von Fremdkunststoffen
7. Sortieren nach Farben (z.B. PET-klar und PET-bunt).

Ähnliche Anforderungen (allerdings mit höheren Grenzwerten) gelten für das werkstoffliche Recycling von Kunststoffen. Allerdings entfällt im Regelfall die Sortierung nach Farben.

Aus WO 2008/058750 A2 ist ein Verfahren zum Abtrennen von Zellstoffen und anderen anhaftenden Stoffen beim Recycling von Abfallkunststoff, insbesondere Mischkunststoff, bekannt. Zum Einsatz kann eine Zahnscheibenmühle kommen, deren Scheiben ineinander greifende Zähne aufweisen, die beabstandet auf konzentrischen Kreisen angeordnet sind. Zwischen den Zähnen eines Kreises sind die Lücken so groß, dass Stücke aus dickerem oder festerem Material frei hindurch treten können. Eine Scheibenmühle ist auch bekannt aus DE 10 2005 013 693 A1, oder EP 2 077 352 A1.

Allerdings wird in der Praxis nicht immer eine ausreichende Reinigung der Kunststoffabfälle von Verunreinigungen erreicht. Dies gilt insbesondere für die Reinigung von flachen Kunststoffschnipseln. Bei solchen flachen Kunststoffschnipseln oder -flakes kann es im Zuge der Reinigung zu einem Falten kommen, so dass nur die außen liegenden Oberflächen gereinigt werden, während die Innenseiten verschmutzt bleiben.

Ausgehend von dem oben erläuterten Stand der Technik liegt der Erfindung die Aufgabe zugrunde, eine Vorrichtung und ein Verfahren der eingangs genannten Art bereitzustellen, mit denen eine bessere Reinigung von Kunststoffschnipseln erreicht wird.

Die Erfindung löst diese Aufgabe durch den Gegenstand von Anspruch 1 und den Gegenstand von Anspruch 12. Vorteilhafte Ausgestaltungen finden sich in den abhängigen Ansprüchen, der Beschreibung und den Figuren.

Für eine Vorrichtung der eingangs genannten Art löst die Erfindung die Aufgabe dadurch, dass die Reinigungsflächen der Reinigungskörper jeweils eine Mehrzahl von sich über ihre Reinigungsflächen erstreckenden Reinigungsrippen aufweisen, wobei zumindest eine Flanke der Reinigungsrippen geneigt oder gekrümmt ist, und dass zwischen zumindest einigen zueinander benachbarten Reinigungsrippen mehrere quer zur Erstreckungsrichtung der Reinigungsrippen verlaufende Reinigungsstege angeordnet sind.

Wie eingangs erläutert, dient die Vorrichtung der Reinigung von Kunststoffschnipseln, Wie ebenfalls eingangs erläutert, fallen die Kunststoffschnipsel bei der Zerkleinerung von Kunststoffabfall, beispielsweise Kunststoffverpackungen wie Getränkeflaschen oder ähnliches an. Die Kunststoffschnipsel sind vorzerkleinerte flächige Kunststoffabfälle, die in Form von Flakes (dünnwandige Hartkunststoffe, Folien etc.) oder in Form von stückigen Kunststoffen (dickwandige Hartkunststoffe) mit einer weitgehend definierten Größe vorliegen können. Wie weiterhin eingangs erläutert, können die zu entfernenden Verunreinigungen, insbesondere Oberflächenanhaftungen sein, zum Beispiel Zellstoffreste, Klebereste, Etikettenreste oder organische Verschmutzungen.

Die erfindungsgemäße Vorrichtung besitzt einen ersten und zweiten Reinigungskörper. Die Reinigungskörper besitzen jeweils eine zumindest abschnittsweise, insbesondere vollständig, kegelförmige bzw. konische und/oder (kreis-)zylindrische Reinigungsfläche. Dabei können die Reinigungsflächen vollständig kegel- bzw. konusförmig oder vollständig zylindrisch sein. Es ist aber auch möglich, dass die Reinigungsflächen sowohl kegel- bzw. konusförmige als auch zylindrische Abschnitte besitzen. Auch ist es möglich, dass die Reinigungsflächen mehrere, beispielsweise zwei, kegel- bzw. konusförmige Abschnitte besitzen, die unterschiedliche Kegel- bzw. Konuswinkel besitzen. Die Reinigungsflächen können sich jeweils über die gesamte Außen- bzw. Innenfläche der Reinigungskörper oder nur über einen oder mehrere Abschnitte der Außen- bzw. Innenfläche der Reinigungskörper erstrecken. Der erste Reinigungskörper kann die Form eines Kegels oder Kegelstumpfes bzw. eines Zylinders besitzen. Der zweite Reinigungskörper kann die Form eines Hohlkegels oder Hohlkegelstumpfes bzw. Hohlzylinders besitzen. Der erste Reinigungskörper wird im Betrieb in Richtung seiner Längsachse in den zweiten Reinigungskörper eingeschoben, wobei die einander gegenüberliegenden Reinigungsflächen einen ebenfalls kegelförmigen bzw. konischen und/oder zylindrischen Reinigungsspalt zwischen sich begrenzen. Der erste Reinigungskörper und/oder der zweite Reinigungskörper wird im Betrieb mittels eines geeigneten Antriebs um seine Längsachse drehend angetrieben. Die Vorrichtung bildet also einen sogenannten Kegel- oder Trommelrefiner. Der Antrieb kann ein elektrischer Antrieb sein. In einfacher Weise kann die Breite des Reinigungsspalts durch eine Verschiebung des ersten und/oder zweiten Reinigungskörpers entlang ihrer Längsachsen eingestellt werden. Es sind aber auch andere Möglichkeiten zur Verstellung der Breite des Reinigungsspalts möglich. Auch ist es denkbar, dass der Reinigungsspalt fest, also nicht einstellbar ist.

Die Reinigungskörper der erfindungsgemäßen Vorrichtung weisen Reinigungsrippen auf, die über die Reinigungsflächen, insbesondere über den Umfang der Reinigungsflächen, verlaufen. Die Rippen können insbesondere durchgehend, also ohne Unterbrechungen in ihrer Erstreckungsrichtung, ausgebildet sein. Die Reinigungsrippen können einen geraden Verlauf besitzen oder gekrümmt sein. Sie können weiterhin in Längsrichtung des jeweiligen Reinigungskörpers über die jeweilige Reinigungsfläche verlaufen. Es ist jedoch auch möglich, dass sie gegenüber der Längsachsenrichtung geneigt oder gekrümmt sind, zum Beispiel schraubenförmig bzw. in Helix-Form. Auch können unterschiedliche Zonen auf den Reinigungsflächen ausgebildet sein, wobei die Reinigungsrippen zumindest zweier, insbesondere mehr als zweier, Zonen einen voneinander unterschiedlichen Verlauf besitzen. Es können auch gegenläufige Zonen gebildet werden für eine Materialrückführung. Mindestens eine der Flanken der Reinigungsrippen ist erfindungsgemäß geneigt oder gekrümmt, insbesondere im Querschnitt gegenüber einer Hochachse der jeweiligen Reinigungsrippe geneigt oder gekrümmt. Die Hochachse einer Reinigungsrippe steht im Querschnitt der Reinigungsrippe senkrecht bzw. lotrecht auf der Oberfläche des jeweiligen Reinigungskörpers in dem Bereich, in dem sich die Reinigungsrippe von der Oberfläche erhebt. Sie entspricht insoweit also der Flächennormalen. Im Querschnitt der Reinigungsrippe verläuft die Hochachse insbesondere durch den Punkt, in dem die betreffende Flanke der Reinigungsrippe ausgehend von der Oberfläche des Reinigungskörpers ihren Anfang nimmt. Die Hochachse steht also auch senkrecht auf der Längserstreckungsrichtung der Reinigungsrippen. Die entsprechenden Flanken können jeweils in einer ebenen oder in einer gekrümmten Fläche liegen. Es ist dabei auch möglich, dass beide Flanken der Reinigungsrippen geneigt oder gekrümmt sind, insbesondere im Querschnitt gegenüber der Hochachse der jeweiligen Reinigungsrippe. Weiterhin sind zwischen zumindest einigen, insbesondere sämtlichen, benachbart zueinander verlaufenden Reinigungsrippen erfindungsgemäß Reinigungsstege angeordnet. Sie verlaufen quer zur Erstreckungsrichtung der Reinigungsrippen. Sie können senkrecht zur Erstreckungsrichtung der Reinigungsrippen verlaufen. Sie können aber auch in einer Richtung quer zur Erstreckungsrichtung der Reinigungsrippen verlaufen, die einen kleineren oder größeren Winkel als 90° zur Erstreckungsrichtung der Reinigungsrippen besitzt.

Der Erfindung liegt die Erkenntnis zugrunde, dass es bei der Aufbereitung von Kunststoffschnipseln, insbesondere von Kunststoffflakes, entscheidend ist, dass die Reinigung der Kunststoffschnipsel ohne eine starke mechanische Beanspruchung durch Stauchung bzw. Deformation erfolgt. Durch die Reduzierung der mechanischen Beanspruchung (Stauchung) wird eine bessere Reinigung der Kunststoffschnipsel erreicht. Insbesondere wird ein Falten oder Knäueln der Kunststoffschnipsel vermieden. Die mit den Verunreinigungen behafteten Oberflächen der Kunststoffschnipsel bleiben somit für die Reinigung zugänglich. Außerdem haben glatte Kunststoffschnipsel eine höhere Schüttdichte und neigen nicht zu einer Verzahnung, so dass ihre Förderfähigkeit verbessert ist. Darüber hinaus lassen sich glatte Kunststoffschnipsel besser sortieren, insbesondere in Sortiervorrichtungen, in denen die Kunststoffschnipsel schwerkraftbedingt von oben nach unten fallen. So bildet sich bei glatten Kunststoffschnipseln ein einheitlicher "Kunststoffschnipselvorhang". Schließlich wird durch die Verringerung der mechanischen Beanspruchung die Erzeugung von Feinanteil vermieden.

Es hat sich gezeigt, dass die erfindungsgemäße Geometrie der Reinigungskörper, insbesondere die Neigung bzw. Krümmung mindestens einer der Flanken der Reinigungsrippen, zu einer solchen geringeren mechanischen Beanspruchung führt. Bei der erfindungsgemäßen Geometrie der Reinigungskörper werden die Kunststoffschnipsel zwischen die Reinigungskörper, insbesondere zwischen die Reinigungsrippen, gezogen. Ein Knicken bzw. Falten oder Knäueln der Kunststoffschnipsel wird vermieden. Zwischen den Reinigungskörpern liegt somit im Idealfall eine Ein-Korn-Schicht der Kunststoffschnipsel vor, so dass diese optimal von Oberflächenverunreinigungen gereinigt werden können. Die Oberfläche der Reinigungsrippen erzeugt dabei die erforderliche Friktion zur Reinigung der Kunststoffschnipsel. Insbesondere werden die Kunststoffschnipsel bei der erfindungsgemäßen Reinigungskörper-Geometrie im Wesentlichen vollflächig angeschliffen, wodurch sämtliche anhaftenden Verschmutzungen abgelöst werden. Das Zugeben von Chemikalien, beispielsweise Natron-Lauge, wie beim Stand der Technik für die Reinigung oftmals erforderlich, ist erfindungsgemäß nicht notwendig. Vielmehr führt die erfindungsgemäße Geometrie der Reinigungskörper bzw. der Reinigungsflächen zu einer ausreichenden Reinigung der Kunststoffschnipsel, ohne dass es dabei zu einer Zerkleinerung der Kunststoffschnipsel kommt bzw. kommen muss.

Weiterhin erfolgt bei der erfindungsgemäßen Geometrie ein leichtes Recken der Kunststoffschnipsel, so dass diese glatt gezogen werden und gegebenenfalls gefaltete Kunststoffschnipsel (beispielsweise aus einer Vorzerkleinerung) wieder aufgefaltet werden. Es hat sich insbesondere gezeigt, dass bei der erfindungsgemäßen Vorrichtung der Hauptteil der Friktion zum Abschleifen und damit Reinigen der Kunststoffschnipsel im Bereich der schrägen bzw. gekrümmten Flanken der Reinigungsrippen erfolgt. Wie erwähnt, muss die entsprechende Flanke dazu nicht zwangsweise in einer planen Ebene liegen. Vielmehr kann eine gekrümmte Flanke vorliegen, so dass ein weicher Übergang zur Scheitelfläche erreicht wird. Wichtig ist, dass eine ausreichend große Friktionsfläche der Reinigungsrippen vorhanden ist, so dass ein ausreichender Reinigungseffekt entsteht. Die in den Kanälen zwischen den Reinigungsrippen erfindungsgemäß angeordneten Reinigungsstege wirken als Barrieren und zwingen die Kunststoffschnipsel zwischen die Reinigungskörper, insbesondere zwischen die Reinigungsrippen der Reinigungskörper.

Das mit der erfindungsgemäßen Vorrichtung erreichte gezielte Anschleifen der Kunststoffschnipsel hat neben der Reinigung noch einen weiteren vorteilhaften Effekt. So werden die Kunststoffschnipsel mit einer matten Oberfläche ausgestattet, die Licht weniger stark reflektiert. Dies erleichtert eine optische Sortierung der Kunststoffschnipsel nach dem Reinigungsprozess. Gerade bei optischen Sortiervorrichtungen, die nach dem Auflichtverfahren zur Farberkennung arbeiten, ist eine stark glänzende und damit reflektierende Oberfläche nachteilig. Durch das erfindungsgemäße Anschleifen der Kunststoffschnipsel wird also eine bessere Erkennung der Kunststoffschnipsel erreicht.

Es sei noch erwähnt, dass die erfindungsgemäßen Kunststoffschnipsel insbesondere flächige Kunststoffteilchen sind. Insbesondere bei Kunststoff mit einer geringen Zähigkeit, beispielsweise HDPE, können zu einem gewissen Anteil auch dickere Kunststoffteilchen enthalten sein, die mit der erfindungsgemäßen Vorrichtung gereinigt werden.

Die in der erfindungsgemäßen Weise ausgestalteten Reinigungskörper mit den durch die schrägen bzw. gekrümmten Flanken relativ breiten Reinigungsrippen verschleißen im Betrieb weniger schnell als konventionelle Reinigungskörper. Darüber hinaus führt die erfindungsgemäße Anordnung der schrägen bzw. gekrümmten Flanken der Reinigungsrippen zusammen mit der relativen Drehbewegung zwischen den Reinigungskörpern zu einer Pumpwirkung. Die zu reinigenden Kunststoffschnipsel werden allein aufgrund der Geometrie der Reinigungskörper und der relativen Drehbewegung durch den Reinigungsspalt hindurch gefördert und gereinigt. Auf eine Feststoffpumpe mit einem dazugehörigen Pumpensumpf, wie diese beim Stand der Technik häufig vorgesehen ist, kann bei entsprechender Ausgestaltung der Geometrie daher möglicherweise verzichtet werden.

Nach einer Ausgestaltung können die geneigten oder gekrümmten Flanken der Reinigungsrippen des ersten und/oder zweiten Reinigungskörpers die bei einer Drehung des mindestens einen Reinigungskörpers vorlaufenden Flanken sein. Bei dem nicht drehend angetriebenen Reinigungskörper ist die vorlaufende Flanke der Reinigungsrippen die im Zuge der Relativdrehung zwischen den Reinigungskörpern vorlaufende Flanke. Durch diese Ausgestaltung werden das erfindungsgemäße Anschleifen der Kunststoffschnipsel und damit die erfindungsgemäße Reinigung in besonders effektiver Weise durchgeführt.

Der Grad der erfindungsgemäßen Neigung bzw. Krümmung der Flanken hängt entscheidend von der Art des zu reinigenden Kunststoffes, der Form der Kunststoffschnipsel und der Größenverteilung innerhalb der zu reinigenden Kunststoffschnipselmenge ab. Entscheidend ist jeweils, dass eine Zerkleinerung bzw. Stauchung der Kunststoffschnipsel möglichst nicht eintritt. Gleichzeitig müssen die Kunststoffschnipsel einer für die Reinigung ausreichenden Friktion unterworfen werden. Daher muss zwischen den einander zugewandten Flanken benachbarter Reinigungsrippen ausreichend Platz zur Aufnahme der zu reinigenden Kunststoffschnipsel bestehen. Bei flachen Kunststoffschnipseln sind dabei Flanken mit einem großen Neigungswinkel bzw. Krümmungswinkel gegenüber der Hochachse geeignet. Insbesondere werden die Kunststoffschnipsel bei einer flach ansteigenden Flanke besonders gut zwischen die Reinigungskörper gezogen. Außerdem steht eine große Abriebfläche zur Verfügung, so dass ein besonders guter Reinigungseffekt erzielt wird. Bei stückigen Kunststoffschnipseln ist dagegen ein kleinerer Neigungswinkel bzw. Krümmungswinkel gegenüber der Hochachse geeignet. Es ist beispielsweise möglich, dass die geneigten Flanken der Reinigungsrippen des ersten und/oder zweiten Reinigungskörpers jeweils einen Neigungswinkel von mindestens 10°, vorzugsweise mindestens 30%, weiter vorzugsweise mindestens 45°, gegenüber der Hochachse der jeweiligen Reinigungsrippe besitzen. Sofern die Flanken der Reinigungsrippen gekrümmt sind, kann vorgesehen sein, dass, in dem Querschnitt senkrecht zur Erstreckungsrichtung der Reinigungsrippen gesehen, eine den Beginn und das Ende der gekrümmten Flanken verbindende Linie einen Neigungswinkel von mindestens 10°, vorzugsweise mindestens 30%, weiter vorzugsweise mindestens 45°, gegenüber der Hochachse der jeweiligen Reinigungsrippe besitzt. Obergrenzen für die genannten Winkel können beispielsweise mindestens 45°, vorzugsweise mindestens 60°, weiter vorzugsweise mindestens 80° sein.

Nach einer weiteren Ausgestaltung können die Reinigungsrippen des ersten und/oder zweiten Reinigungskörpers in einer senkrecht zu ihrer Längserstreckung verlaufenden Richtung (jeweils) ein Sägezahnprofil bilden. Die Reinigungsrippen können in dieser Richtung, beispielsweise entlang einer oder mehrerer gerader oder gekrümmter oder anderweitiger Bahnen im Schnitt ein Sägezahnprofil bilden. Sie können also in der genannten Richtung gesehen im Wesentlichen direkt ineinander übergehen. Hierdurch werden (horizontale) Bodenflächen zwischen benachbarten Reinigungsrippen vermieden, in denen sich Kunststoffschnipsel unerwünscht ansammeln könnten. Es ist aber grundsätzlich auch möglich, dass zwischen benachbarten Reinigungsrippen Bodenflächen vorgesehen sind.

Nach einer weiteren Ausgestaltung können die Reinigungsrippen des ersten und/oder zweiten Reinigungskörpers zumindest im Übergang zwischen Ihrer mindestens einen geneigten oder gekrümmten Flanke und ihrer Scheitelfläche abgerundet sein. Weiterhin können die Reinigungsrippen des ersten und/oder zweiten Reinigungskörpers eine gegenüber ihrer Hochachse senkrechte Scheitelfläche besitzen. Die Scheitelfläche kann auch in einer Ebene liegen, die parallel zu der Oberfläche des jeweiligen Reinigungskörpers in dem Bereich ist, in dem sich die Reinigungsrippe von der Oberfläche erhebt. Selbstverständlich können die Reinigungsrippen auch im Übergang zu einer gegebenenfalls nicht geneigten oder nicht gekrümmten zweiten Flanke abgerundet sein. Indem an dem Übergang zwischen der Flanke und der Scheitelfläche keine scharfe Kante, insbesondere kein scharfer Grat, gebildet ist, wird ein Aufkräuseln der Kunststoffschnipsel vermieden. Vielmehr wird durch die Abrundung und die Scheitelfläche sichergestellt, dass die Kunststoffschnipsel im ungefalteten flachen Zustand zwischen die Reinigungskörper gezogen und dort gereinigt werden.

Die Reinigungsstege des ersten und/oder zweiten Reinigungskörpers sind in einer Richtung parallel zur Längserstreckung bzw. Längsachse der Reinigungsrippen jeweils rampenartig ansteigen. Das führt zu einem besonders wirksamen Einziehen der Kunststoffschnipsel in dem Bearbeitungsbereich zwischen den Reinigungskörper. Die Reinigungsstege des ersten Reinigungskörpers besitzen eine geringere Höhe als die Reinigungsrippen des ersten Reinigungskörpers und/oder die Reinigungsstege des zweiten Reinigungskörpers besitzen eine geringere Höhe als die Reinigungsrippen des zweiten Reinigungskörpers. Dabei werden die Kunststoffschnipsel materialschonender zwischen den Reinigungskörpern bearbeitet, da nicht an jedem Reinigungssteg sämtliche Schnipsel zwischen die Reinigungskörper gezwungen werden. Insbesondere können Flakes, die eine größerer Wandstärke als der Reinigungsspalt zwischen den Reinigungsrippen aufweisen, durch die sich ergebene Lücke hindurch gleiten, ohne dass sie von den Reinigungsrippen zerrieben werden.

Nach einer weiteren Ausgestaltung kann vorgesehen sein, dass zwischen den Scheitelflächen der Reinigungsrippen der ersten Reinigungsfläche und den Scheitelflächen der Reinigungsrippen der zweiten Reinigungsfläche ein Abstand besteht, der im Wesentlichen der durchschnittlichen Dicke der mittels der Zuführeinrichtung zugeführten Kunststoffschnipsel, insbesondere der Hauptkornklasse, entspricht. Der Abstand der Reinigungskörper und damit die Dicke des Reinigungsspalts werden also an die Dicke der durchschnittlich zu erwartenden Kunststoffschnipsel angepasst. Der Abstand der Reinigungskörper sollte möglichst so eingestellt werden, dass nur einzelne Kunststoffschnipsel zwischen die Reinigungskörper passen. Dadurch wird eine optimale Reinigung durch Anschleifen der Ober- und Unterseiten der Kunststoffschnipsel erreicht. Hierzu wiederum ist es von Vorteil, wenn die zu reinigenden Kunststoffschnipsel eine möglichst geringe Dickenstreuung aufweisen. Falls eine Dickenstreuung vorhanden ist, kann die Höhe der Reinigungsstege so gewählt werden, dass im Betriebszustand der Reinigungskörper der Abstand zwischen gegenüberliegenden Reinigungsstegen der durchschnittlichen Dicke der dicksten Kunststoffschnipsel entspricht. Das Erreichen der jeweils optimalen Grenzdicke des Reinigungsspalts kann an der Leistungsaufnahme der Antriebseinrichtung festgestellt werden. Ein Unterschreiten der Grenzdicke führt zu einem sprunghaften Anstieg der Leistungsaufnahme. Beispielhaft genannt sei für die Aufbereitung von PET-Flaschen aus Einwegssystemen ein Reinigungsspalt von 0,25 mm, bei der Aufbereitung von PET-Mehrwegflaschen (dickere Wandung) ein Reinigungsspalt von 0,50 mm und bei der Aufbereitung von Folienschnipseln ein Reinigungsspalt von 0,1 mm. Der jeweils geeignete Abstand muss abhängig von dem Material ermittelt und angepasst werden.

Grundsätzlich kann der erste und/oder zweite Reinigungskörper einteilig ausgebildet sein oder aus mehreren Reinigungskörpersegmenten bestehen. Die Vorrichtung kann weiterhin eine Flüssigkeitszuführeinrichtung aufweisen, mit der Flüssigkeit, insbesondere Wasser oder eine wässrige Lösung, in den Reinigungsspalt zuführbar ist. Die Flüssigkeitszufuhr dient zum Fördern der Kunststoffschnipsel durch den Reinigungsspalt und zum Abführen des im Zuge des Reinigungsprozesses entstehenden Abriebs. Durch die erfindungsgemäße Geometrie der Reinigungskörper wird ein hydrodynamischer Prozess erzeugt. Es entstehen Turbulenzen der Wasserströmung, die wiederum zu sehr hohen Fließgeschwindigkeiten der Flüssigkeit durch den Reinigungsspalt führen. Es kommt zu einem starken Anpressen der zu reinigenden Kunststoffschnipsel an die Reinigungsrippen, insbesondere die geneigten bzw. gekrümmten Flanken und die Scheitelflächen, Die Reinigung der Kunststoffschnipsel wird hierdurch verbessert. Bei der erfindungsgemäßen Vorrichtung ist keine Mindestfeststoffkonzentration (Verhältnis Feststoffmenge, insbesondere Kunststoffschnipselmenge, zu Flüssigkeitsmenge) vorgegeben. Auch geringe Feststoffkonzentrationen sind mit der erfindungsgemäßen Vorrichtung darstellbar. Insbesondere können Feststoffkonzentrationen von weniger als 10% zum Einsatz kommen. Die maximale Feststoffkonzentration ist abhängig von dem Grad der Verschmutzung bzw. der maximalen Verarbeitungskapazität der verwendeten Reinigungskörper. Die maximale Feststoffkonzentration kann durch Verwendung größerer Reinigungskörper erhöht werden. Die verwendete Flüssigkeitsmenge wird an den Verschmutzungsgrad der zu reinigenden Kunststoffschnipsel und die im Prozess erzeugte Wärme angepasst.

Nach einer weiteren Ausgestaltung können die Reinigungsstege des ersten und zweiten Reinigungskörpers so angeordnet sein, dass sie bei einer Drehung des mindestens einen Reinigungskörpers nicht oder nicht dauerhaft in einander direkt gegenüberliegende Positionen gelangen. Weiterhin können die Reinigungsstege auf der ersten und zweiten Reinigungsfläche jeweils entlang mehrerer Umfangsbahnen auf der jeweiligen Reinigungsfläche angeordnet sein. Die Umfangsbahnen der Reinigungsstege auf der ersten Reinigungsfläche können dabei andere Verläufe besitzen als die Umfangsbahnen der Reinigungsstege auf der zweiten Reinigungsfläche. Weiterhin kann vorgesehen sein, dass die Reinigungsstege entlang der Umfangsbahn jeweils zwischen jedem Paar von benachbarten Reinigungsrippen angeordnet sind. Die Umfangsbahnen können jeweils ringförmig um die Längsachse des jeweiligen Reinigungskörpers verlaufen. Es kann dann eine Vielzahl paralleler ringförmiger solcher Umfangsbahnen gebildet werden, . Mittels unterschiedlicher Umfangsbahnen auf der ersten und zweiten Reinigungsfläche kann erreicht werden, dass sich die Reinigungsstege im Zuge der Relativdrehung der Reinigungskörper nicht direkt gegenüber liegen. So können die ringförmigen Umfangsbahnen beispielsweise jeweils in Längsachsenrichtung der Reinigungskörper gesehen versetzt zueinander angeordnet sein. Hierdurch wird die mechanische Beanspruchung der Kunststoffschnipsel verringert. Die Reinigungskörper können also unterschiedlich zueinander ausgestaltet sein. Sie können allerdings an ihrem äußeren und/oder ihrem inneren Rand jeweils direkt gegenüberliegend eine Umfangsbahn mit Reinigungsstegen besitzen.

Alternativ ist es auch möglich, dass die Reinigungsflächen der Reinigungskörper identisch zueinander ausgebildet sind. Dabei können zumindest einige der Umfangsbahnen auf der ersten Reinigungsfläche und der Umfangsbahnen auf der zweiten Reinigungsfläche den gleichen Verlauf besitzen, wobei zumindest die Reinigungsstege entlang der Umfangsbahnen mit gleichem Verlauf jeweils nur zwischen jedem zweiten Paar von benachbarten Reinigungsrippen angeordnet sind. Es können dabei insbesondere sämtliche der Umfangsbahnen auf der ersten Reinigungsfläche und der Umfangsbahnen auf der zweiten Reinigungsfläche den gleichen Verlauf besitzen und weiterhin insbesondere die Reinigungsstege entlang Umfangsbahnen mit gleichem Verlauf jeweils nur zwischen jedem zweiten Paar von benachbarten Reinigungsrippen angeordnet sein. Hierbei ist also eine alternierende Anordnung vorgesehen, wobei die Reinigungsstege nur in jedem zweiten Kanal zwischen benachbarten Reinigungsrippen vorgesehen sind. Es kommt bei der Relativdrehung der Reinigungskörper zueinander also zu einem direkten Gegenüberliegen von Reinigungsstegen während 50% der Bearbeitungszeit. Während diese Ausgestaltung Vorteile hinsichtlich der Herstellungskosten der Reinigungskörper besitzt, führt sie allerdings zu einer höheren Beanspruchung der Kunststoffschnipsel. Sie ist insbesondere bei sehr dünnen Kunststoffschnipseln (Kunststofffolienschnipseln) dennoch gut geeignet.

Die Erfindung betrifft außerdem ein Verfahren zum Entfernen von Verunreinigungen auf Kunststoffschnipseln unter Verwendung einer erfindungsgemäßen Vorrichtung, bei dem mindestens ein Reinigungskörper mittels der Antriebseinrichtung um seine Längsachse drehend angetrieben wird, bei dem mittels der Flüssigkeitszuführeinrichtung Flüssigkeit, insbesondere Wasser oder eine wässrige Lösung, in den Reinigungsspalt zugeführt wird, bei dem mittels der Zuführeinrichtung Kunststoffschnipsel in den Reinigungsspalt zugeführt werden und bei dem die Kunststoffschnipsel durch den Reinigungsspalt gefördert werden. Die Förderung der Kunststoffschnipsel durch den Reinigungsspalt geschieht dabei aufgrund der Relativdrehung der Reinigungskörper zueinander und dem Zuführen von Flüssigkeit.

Bei dem erfindungsgemäßen Verfahren werden vorzerkleinerte Kunststoffabfälle in Form von Kunststoffschnipseln (Flakes) in die Vorrichtung gegeben. Die Reinigung der Kunststoffschnipsel erfolgt durch gezielte Friktion der Reinigungskörper in der oben beschriebenen Weise, wobei der Grad der Friktion durch eine Regelung des Reinigungskörperabstands einstellbar ist. Wie eingangs erwähnt, kann dieser Abstand in einfacher Weise durch eine Relativverschiebung der Reinigungskörper zueinander entlang ihrer Längsachse realisiert werden. Es wird eine Suspension erzeugt, deren Bestandteile die zugeführte Flüssigkeit, beispielsweise Wasser, die gereinigten Kunststoffschnipsel und von diesen abgeriebene Stoffe sind (beispielsweise Kleber, Zellstoff, Etiketten, organische Verschmutzungen usw.). Nach der Reinigung erfolgt ein Trennen der Suspension mit den Verunreinigungen von den gereinigten Kunststoffschnipseln.

Nach einer weiteren Ausgestaltung kann vorgesehen sein, dass zu reinigende Kunststoffschnipsel vor dem Zuführen in den Reinigungsspalt und dem Fördern durch den Reinigungsspalt der für das Entfernen von Verunreinigungen eigentlich vorgesehenen Vorrichtung in einer Vorreinigungsvorrichtung einer Vorreinigung unterzogen werden. Die Vorreinigungsvorrichtung besitzt dabei eine erste Reinigungsscheibe mit einer ersten Reinigungsfläche und eine zweite Reinigungsscheibe mit einer zweiten Reinigungsfläche, wobei die Reinigungsflächen einander gegenüberliegen und zwischen sich einen Reinigungsspalt begrenzen, der größer ist als der Reinigungsspalt der anschließend zum Entfernen von Verunreinigungen auf den Kunststoffschnipseln verwendeten Vorrichtung. Dabei kann mindestens eine der beispielsweise zylindrischen Reinigungsscheiben um ihre Rotationsachse, die gleichzeitig ihre Zylinderachse ist, gedreht werden, Flüssigkeit, insbesondere Wasser oder eine wässrige Lösung, kann in den Reinigungsspalt der Vorreinigungsvorrichtung zugeführt werden und die zu reinigenden Kunststoffschnipsel können zwischen die Reinigungsscheiben der Vorreinigungsvorrichtung zugeführt und durch den Reinigungsspalt gefördert werden. Anschließend werden die zu reinigenden Kunststoffschnipsel der oben erläuterten (Haupt-)Reinigungsvorrichtung zugeführt. Es erfolgt also ein zweistufiger Reinigungsprozess.

Die Vorreinigungsvorrichtung kann kleiner dimensioniert werden als die anschließend verwendete Haupteinigungsvorrichtung. Indem der Reinigungsspalt der Vorreinigungsvorrichtung größer ist als der der Hauptreinigungsvorrichtung, kann erreicht werden, dass nur eine geringe oder im Wesentlichen gar keine abrasive Bearbeitung der Kunststoffschnipsel erfolgt. Insbesondere kann vorgesehen sein, dass der Reinigungsspalt der Vorreinigungsvorrichtung durch Einstellung des Abstands der Reinigungsscheiben so gewählt wird, dass im Zuge der Vorreinigung von den Kunststoffschnipseln entfernte Verunreinigungen, beispielsweise entfernte Zellstoffe, im Wesentlichen nicht zerstört werden. Dies erleichtert die anschließende Reinigung der Kunststoffschnipsel in der Hauptreinigungsvorrichtung erheblich.

Es ist auch möglich, dass zu reinigende Kunststoffschnipsel vor dem Zuführen in den Reinigungsspalt und dem Fördern durch den Reinigungsspalt der Vorrichtung in einer Vorreinigungsvorrichtung einer Vorreinigung unterzogen werden, wobei die Vorreinigungsvorrichtung einen Reinigungshohlzylinder mit einer ersten Reinigungsfläche an seiner zylindrischen Innenfläche und einen in dem Reinigungshohlzylinder angeordneten Reinigungszylinder mit einer zweiten Reinigungsfläche an seiner zylindrischen Außenfläche umfasst, wobei die Reinigungsflächen zwischen sich einen Reinigungsspalt begrenzen, der größer ist als der Reinigungsspalt der anschließend zum Entfernen von Verunreinigungen auf den Kunststoffschnipseln verwendeten Vorrichtung. Dabei werden der Reinigungshohlzylinder und/oder der Reinigungszylinder drehend angetrieben. Der Reinigungsspalt der Vorreinigungsvorrichtung kann dann wiederum durch Einstellung des Abstands zwischen dem Reinigungshohlzylinder und dem Reinigungszylinder so gewählt werden, dass im Zuge der Vorreinigung von den Kunststoffschnipseln entfernte Verunreinigungen im Wesentlichen nicht zerstört werden.

Schließlich ist es auch möglich, dass zu reinigende Kunststoffschnipsel vor dem Zuführen in den Reinigungsspalt und dem Fördern durch den Reinigungsspalt der Vorrichtung in einer Vorreinigungsvorrichtung einer Vorreinigung unterzogen werden, wobei die Vorreinigungsvorrichtung mindestens einen ersten Vorreinigungskörper mit einer eine erste Reinigungsfläche bildenden zumindest abschnittsweise kegelförmigen Außenfläche und mindestens einen zweiten Vorreinigungskörper mit einer eine zweite Reinigungsfläche bildenden zumindest abschnittsweise kegelförmigen Innenfläche umfasst, wobei die Reinigungsflächen zwischen sich einen Reinigungsspalt begrenzen, der größer ist als der Reinigungsspalt der anschließend zum Entfernen von Verunreinigungen auf den Kunststoffschnipseln verwendeten Vorrichtung. Dabei werden der erste Vorreinigungskörper und/oder der zweite Vorreinigungskörper drehend angetrieben. Der Reinigungsspalt der Vorreinigungsvorrichtung kann wiederum durch Einstellung des Abstands zwischen dem ersten Vorreinigungskörper und dem zweiten Vorreinigungskörper so gewählt werden, dass im Zuge der Vorreinigung von den Kunststoffschnipseln entfernte Verunreinigungen im Wesentlichen nicht zerstört werden.

Bei allen der vorgenannten drei alternativen Ausgestaltungen kann insbesondere sichergestellt werden, dass im Zuge der Vorreinigung von den Kunststoffschnipseln entfernte Verunreinigungen, wie Zellstoffe, im Wesentlichen nicht zerstört werden, also als intakte Struktur (z.B. Zellstofffaser) vorliegen. Diese können dann in einfacher Weise anschließend mittels Filtration und/oder Siebung aus der Prozessflüssigkeit, insbesondere dem Prozesswasser, entfernt werden. Werden Verunreinigungen dagegen zu stark zerstört (z.B. Zellstofffasern zu stark aufgemahlen), sind diese nur noch mit aufwendigen Prozesswasserreinigungsmethoden entfernbar.

Ausführungsbeispiele der Erfindung werden nachfolgend anhand von Figuren näher erläutert. Es zeigen schematisch:
- Figur 1: einen ersten Reinigungskörper einer erfindungsgemäßen Vorrichtung nach einem ersten Ausführungsbeispiel in einer perspektivischen Ansicht,
- Figur 2: den ersten Reinigungskörper aus Figur 1 in einer Ansicht von vorne,
- Figur 3: einen zweiten Reinigungskörper einer erfindungsgemäßen Vorrichtung in einer perspektivischen Ansicht,
- Figur 4: den zweiten Reinigungskörper aus Figur 3 in einer Ansicht von vorne,
- Figur 5: die Reinigungskörper aus den Figuren 1 und 3 in einem teilweise zusammengesetzten Zustand in einer perspektivischen Ansicht,
- Figur 6: einen ersten Reinigungskörper einer erfindungsgemäßen Vorrichtung nach einem zweiten Ausführungsbeispiel in einer perspektivischen Ansicht,
- Figur 7: eine ausschnittsweise Schnittdarstellung in Richtung der Längsachse des ersten Reinigungskörpers aus Figur 1,
- Figur 8: ausschnittsweise den ersten Reinigungskörper aus Figur 1 und den zweiten Reinigungskörper aus Figur 3 in einer in Umlaufrichtung senkrecht zur Längsachse der Reinigungskörper geschnittenen Ansicht,
- Figur 9: die Ansicht aus Figur 8 in einem ersten Betriebszustand,
- Figur 10: die Ansicht aus Figur 8 in einem zweiten Betriebszustand, und
- Figur 11: die Ansicht aus Figur 8 in einem dritten Betriebszustand.

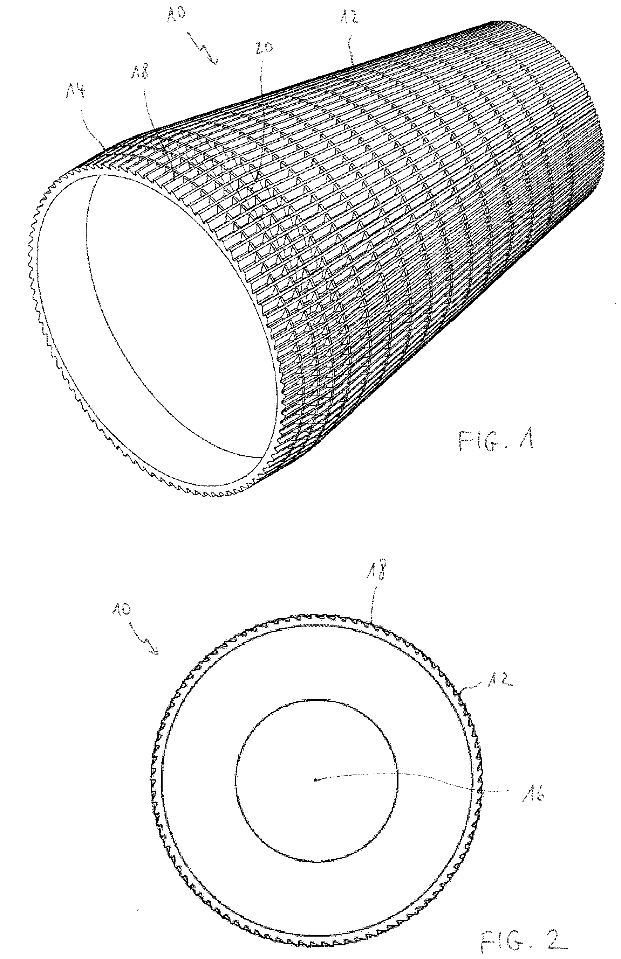

Soweit nichts anderes angegeben ist, bezeichnen in den Figuren gleiche Bezugszeichen gleiche Gegenstände. In Figur 1 ist ein erster Reinigungskörper 10 einer erfindungsgemäßen Vorrichtung nach einem ersten Ausführungsbeispiel in einer perspektivischen Ansicht gezeigt. Figur 2 zeigt den ersten Reinigungskörper 10 aus Figur 1 in einer Frontalansicht von vorne. Der Reinigungskörper 10 besitzt eine Hohlkegelstumpf-Grundform mit einer abschnittsweise kegel- bzw. konusförmigen ersten Reinigungsfläche 12. In dem in Fig. 1 vorderen Bereich geht der kegel- bzw. konusförmige Abschnitt der Reinigungsfläche 12 in einen kreiszylindrischen Abschnitt 14 über. Die Längsachse, die gleichzeitig die Rotationsachse des Reinigungskörpers 10 ist, ist in Figur 2 bei dem Bezugszeichen 16 dargestellt. Auf der Reinigungsfläche 12 ist eine Vielzahl von sich in Längsrichtung des Reinigungskörpers 10 erstreckenden Reinigungsrippen 18 angeordnet. Es ist zu erkennen, dass die Reinigungsrippen 18 unter Berücksichtigung der konusförmigen Verjüngung des Reinigungskörpers 10 in Längsrichtung im Wesentlichen parallel zueinander angeordnet sind. Es versteht sich, dass sich der Abstand zwischen benachbarten Reinigungsrippen dabei mit zunehmender Verjüngung des Reinigungskörpers bzw. der Reinigungsfläche verringert. Es kann daher erforderlich sein, ab einem bestimmten Grad der Verjüngung in einem stark verjüngten Abschnitt der Reinigungsflächen beispielsweise jede zweite Reinigungsrippe zu entfernen. In dem gezeigten Beispiel sind zwischen sämtlichen zueinander benachbarten Reinigungsrippen 18 jeweils mehrere quer zur Erstreckungsrichtung der Reinigungsrippen verlaufende Reinigungsstege 20 angeordnet. Die Reinigungsstege 20 sind entlang mehrerer ringförmiger Bahnen um die Längsachse 16 des Reinigungskörpers 10 bzw. der Reinigungsfläche 12 angeordnet. Es sei darauf hingewiesen, dass die Reinigungsstege 20 nicht entlang ringförmiger Bahnen angeordnet sein müssen. Beispielsweise ist es auch denkbar, die Reinigungsstege 20 beispielsweise in jedem zweiten zwischen den Reinigungsrippen 18 gebildeten Kanal in Längsrichtung des Reinigungskörpers 10 zu versetzen.

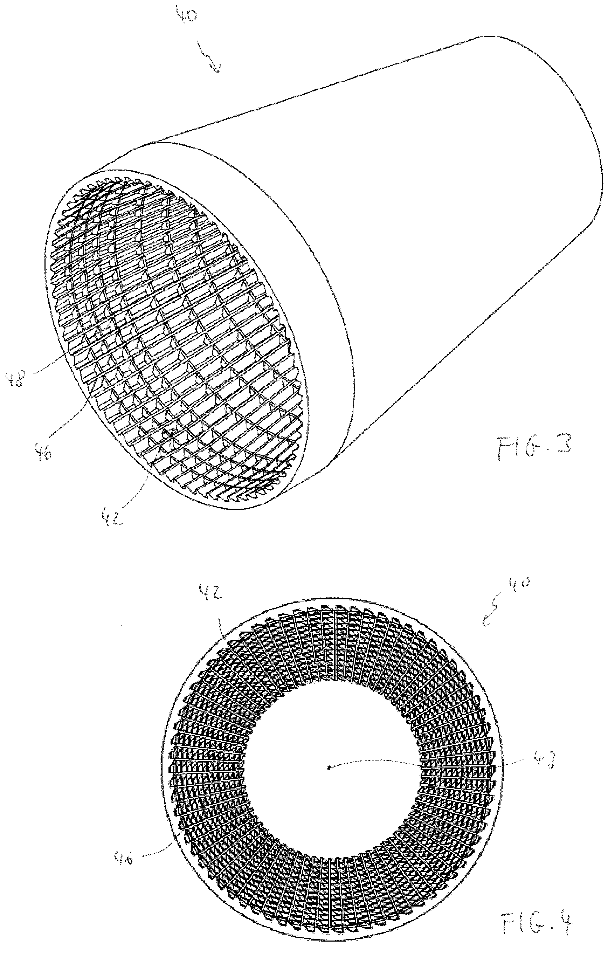

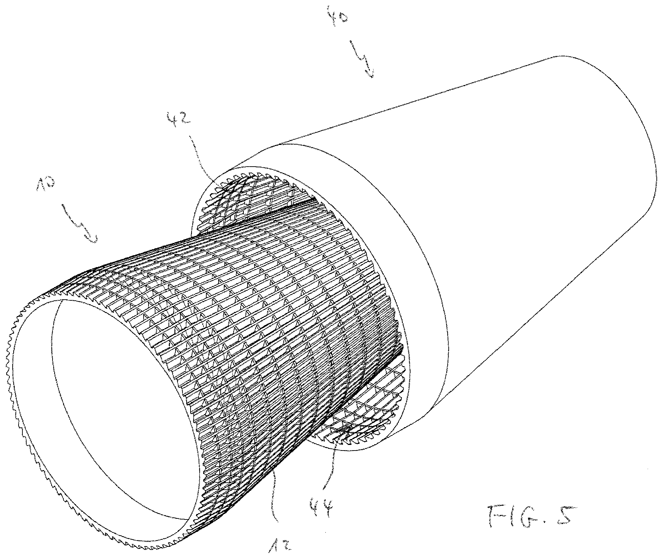

Zu dem in den Figuren 1 und 2 gezeigten ersten Reinigungskörper gehört weiterhin ein in den Figuren 3 und 4 gezeigter zweiter Reinigungskörper 40. Dieser weist, wie bei Kegel- und Trommelrefinern an sich bekannt, eine eine zweite Reinigungsfläche 42 bildende zumindest abschnittsweise kegelförmige Innenfläche auf, wobei der zweite Reinigungskörper 40 dazu ausgebildet ist, den ersten Reinigungskörper 10 aufzunehmen, wie dies in Figur 5 gezeigt ist. Die erste und zweite Reinigungsfläche 12, 42 liegen dann einander gegenüber und begrenzen zwischen sich einen Reinigungsspalt 44. Mittels eines geeigneten Drehantriebs kann mindestens einer der Reinigungskörper drehend angetrieben werden. Die Längsachse des zweiten Reinigungskörpers 40 ist in Figur 4 bei dem Bezugszeichen 43 gezeigt. Die zweite Reinigungsfläche 42 des zweiten Reinigungskörpers 40 kann großenteils identisch zu der ersten Reinigungsfläche 12 des ersten Reinigungskörpers 10 ausgebildet sein. Insbesondere besitzt auch die zweite Reinigungsfläche 42 identisch zu den Reinigungsrippen 18 des ersten Reinigungskörpers 10 ausgebildete Reinigungsrippen 46. Darüber hinaus besitzt auch der zweite Reinigungskörper 40 zwischen sämtlichen zueinander benachbarten Reinigungsrippen 46 jeweils mehrere Reinigungsstege 48, die wiederum entlang mehrerer ringförmiger Bahnen um die Längsachse des zweiten Reinigungskörpers 40 bzw. der Reinigungsfläche 42 angeordnet sind.

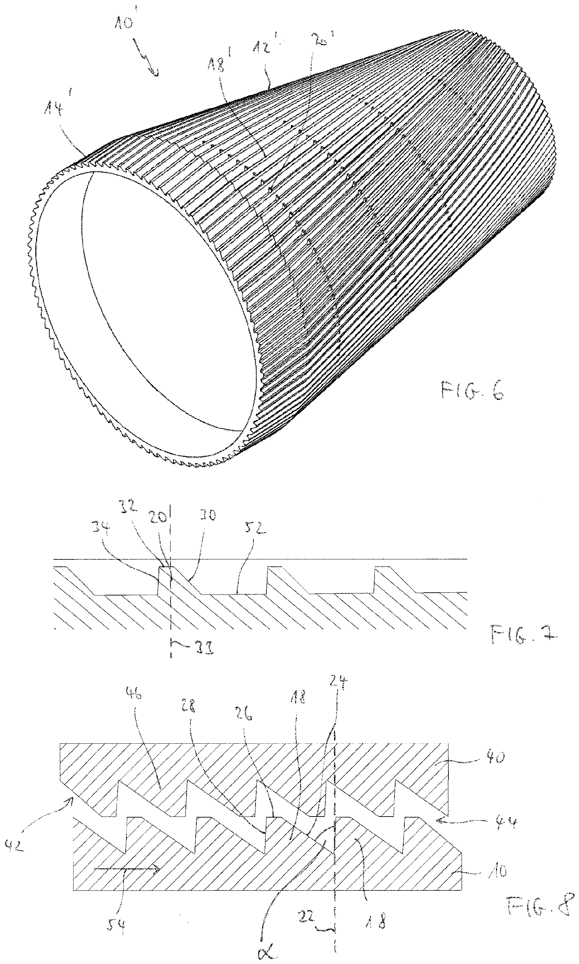

In Figur 6 ist eine alternative Ausführungsform eines ersten Reinigungskörpers 10' gezeigt. Dieser entspricht im Aufbau weitgehend dem in den Figuren 1 und 2 gezeigten Reinigungskörper. Er besitzt ebenfalls eine Hohlkegelstumpf-Grundform mit einer abschnittsweise kegel- bzw. konusförmigen ersten Reinigungsfläche 12'. In dem in Fig. 6 vorderen Bereich geht der kegel- bzw. konusförmige Abschnitt der Reinigungsfläche 12' wiederum in einen kreiszylindrischen Abschnitt 14' über. Im Unterschied zu dem Ausführungsbeispiel der Figuren 1 und 2 verlaufen die Reinigungsrippen 18 bei dem Ausführungsbeispiel der Figur 6 allerdings helixförmig über die Reinigungsfläche 12'. Wiederum sind zwischen sämtlichen zueinander benachbarten Reinigungsrippen 18' jeweils mehrere sich quer zur Erstreckungsrichtung der Reinigungsrippen 18' erstreckende Reinigungsstege 20' angeordnet. Die Reinigungsstege 20' sind entlang einer helixförmigen Bahn um die Längsachse des Reinigungskörpers 10' bzw. der Reinigungsfläche 12' angeordnet. Es sei darauf hingewiesen, dass die Reinigungsstege 20' auch entlang mehrere helixförmiger Bahnen angeordnet sein können. Auch können die Reinigungsstege 20'beispielsweise in jedem zweiten zwischen den Reinigungsrippen 18' gebildeten Kanal in Längsrichtung des Reinigungskörpers 10' versetzt angeordnet sein. Zu dem in Figur 6 gezeigten ersten Reinigungskörper 10' gehört ebenfalls ein zweiter Reinigungskörper (nicht gezeigt), der in analoger Weise mit dem ersten Reinigungskörper 10' zusammenwirkt, wie dies in Figur 5 für das erste Ausführungsbeispiel gezeigt ist. Der zweite Reinigungskörper kann eine insoweit zu der Reinigungsfläche 12' des ersten Reinigungskörpers 10' identisch ausgebildete Reinigungsfläche an seiner Innenfläche besitzen.

Der Aufbau der Reinigungsrippen 18 und der Reinigungsstege 20 des in den Figuren 1 und 2 gezeigten Reinigungskörpers 10 ist in den Figuren 7 bis 11 näher dargestellt. Es versteht sich, dass der Aufbau der Reinigungsrippen 18 und der Reinigungsstege 20 des in Figur 6 gezeigten Reinigungskörpers 10' dem in den Figuren 7 bis 11 gezeigten Aufbau weitgehend entspricht. Beispielsweise in Figur 8 ist zu erkennen, dass die Reinigungsrippen 18 jeweils eine gegenüber einer in Figur 8 bei dem Bezugszeichen 22 beispielhaft gezeigten Hochachse der Reinigungsrippen 18 geneigte erste Flanke 24 besitzen. Die erste Flanke 24 mündet in eine gegenüber der Hochachse 22 senkrechte Scheitelfläche 26. Die Scheitelfläche 26 mündet wiederum in eine zweite Flanke 28 der Reinigungsrippen 18, die in dem gezeigten Beispiel in einer Ebene liegt, die nahezu parallel zu der Hochachse 22 ist. In Figur 7 ist zu erkennen, dass die Reinigungsstege 20 in Umfangsrichtung des ersten Reinigungskörpers 10 gesehen jeweils eine rampenartig ansteigende Fläche 30 besitzen, die in eine Scheitelfläche 32 mündet, die in einer zu einer in Figur 7 bei dem Bezugszeichen 33 gezeigten Normalen auf der Oberfläche des ersten Reinigungskörpers 10 senkrechten Ebene liegt. Die der Fläche 30 gegenüberliegende Fläche 34 der Reinigungsstege ist wiederum in einer Ebene angeordnet, die nahezu parallel zu der Normalen 33 ist. Die Höhe der Reinigungsstege 20, insbesondere ihrer Scheitelflächen 32, ist dabei geringer als die Höhe der Reinigungsrippen 18, insbesondere ihrer Scheitelflächen 26. Weiterhin ist zu erkennen, dass zwischen hintereinander angeordneten Reinigungsstegen 20 jeweils eine ebene Bodenfläche 52 ausgebildet ist.

In Figur 8 ist der in den Figuren 1 und 2 gezeigte erste Reinigungskörper 10 mit dem in den Figuren 3 und 4 gezeigten zweiten Reinigungskörper 40 ausschnittsweise dargestellt. Zwischen den Reinigungsflächen 12 und 42 der ersten und zweiten Reinigungskörper 10, 40 ist entsprechend der Reinigungsspalt 44 gebildet. Die zweite Reinigungsfläche 42 des zweiten Reinigungskörpers 40 kann wie bereits erwähnt großenteils identisch zu der ersten Reinigungsfläche 12 des ersten Reinigungskörpers 10 ausgebildet sein. Allerdings können die ringförmigen Bahnen der Reinigungsrippen des ersten und zweiten Reinigungskörpers 10, 40 in Längsrichtung der Reinigungskörper 10, 40 zueinander versetzt sein, so dass bei einer Relativdrehung zwischen den Reinigungskörpern 10, 40 im Betrieb die Reinigungsstege 20, 48 nicht in eine einander direkt gegenüberliegende Position gelangen.

Die erfindungsgemäße Vorrichtung umfasst weiterhin eine nicht dargestellte Antriebseinrichtung, mit der beispielsweise der erste Reinigungskörper 10 um seine Längsachse gedreht werden kann. Weiterhin umfasst die Vorrichtung eine Kunststoffzuführeinrichtung (ebenfalls nicht dargestellt), mit der zu reinigende Kunststoffschnipsel in den Reinigungsspalt 44 zugeführt werden. Schließlich umfasst die Vorrichtung eine ebenfalls nicht dargestellte Flüssigkeitszuführeinrichtung, mit der in dem gezeigten Beispiel Wasser in den Reinigungsspalt 44 geleitet wird.

In Figur 8 ist weiterhin zu erkennen, dass die Reinigungsrippen 18 unmittelbar hintereinander angeordnet sind, so dass sie in der Schnittansicht in Figur 8 quer zu ihrer Längserstreckung ein Sägezahnprofil ergeben. Schließlich ist zu erkennen, dass die Reinigungsrippen 46 des zweiten Reinigungskörpers 40 insoweit identisch zu den Reinigungsrippen 18 des ersten Reinigungskörpers 10 ausgebildet sind. Die Drehrichtung des ersten Reinigungskörpers 40 im Zuge der Rotation durch die Antriebseinrichtung ist in Figur 8 durch den Pfeil 54 veranschaulicht. Zu erkennen ist, dass die geneigten Flanken 24 der Reinigungsrippen 18, 46 die bei einer Drehung des ersten Reinigungskörpers 10 jeweils vorlaufenden Flanken sind. Zu erwähnen ist außerdem, dass die geneigten Flanken 24 der Reinigungsrippen 18, 46 jeweils einen Winkel α zu der Hochachse 22 von mehr als 45° besitzen. Hierdurch steht eine vergleichsweise große Abriebfläche auf den geneigten Flanken 24 zur Verfügung, wodurch der Reinigungseffekt verbessert wird.

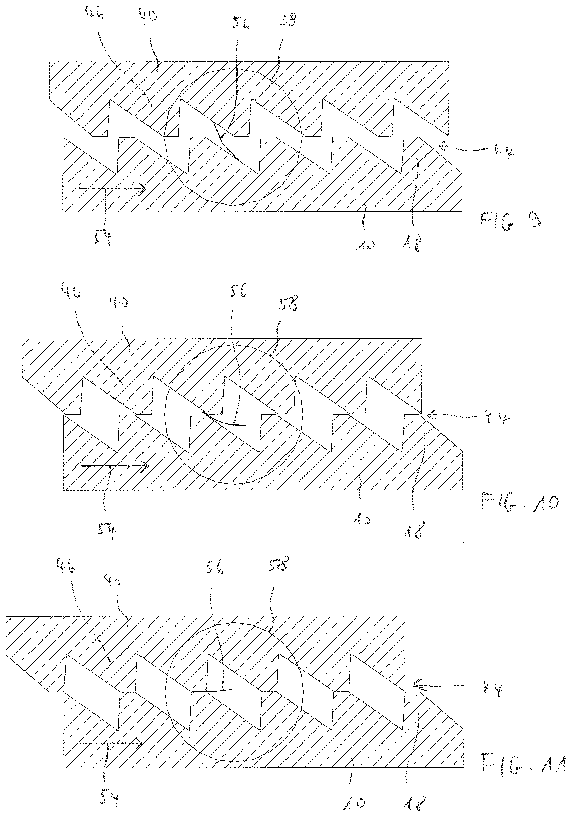

Ausgehend von der Darstellung der Figur 8 soll anhand der Figuren 9 bis 11 die Reinigung eines Kunststoffschnipsels 56, insbesondere eines Kunststoffflakes 56, veranschaulicht werden. Figur 9 zeigt die Relativposition der Reinigungskörper 10, 40 zueinander, wie sie in Figur 8 gezeigt ist. Der Kunststoffflake 56 befindet sich innerhalb des in den Figuren 9 bis 11 aus Veranschaulichungsgründen gezeigten Kreises 58. In Figur 9 befindet sich der Kunststoffflake 56 in einer leicht geknickten bzw. gebogenen Form in einem Freiraum zwischen gegenüberliegenden Reinigungsrippen 18, 46. Im Zuge der Drehbewegung des ersten Reinigungskörpers 10 entlang des Pfeils 54 gelangt der Kunststoffflake 56 anschließend zwischen die Scheitelflächen der Reinigungsrippen 18, 48, wie dies in den Figuren 10 und 11 gezeigt ist. Dabei kommt es zu einem Recken des Kunststoffflakes 56 sowie einem abrasiven Kontakt mit den gekrümmten Flanken und den Scheitelflächen der beteiligten Reinigungsrippen 18, 46. Hierbei wiederum kommt es zu einem Abrieb von auf den Oberflächen des Kunststoffflakes 56 anhaftenden Verunreinigungen. Verstärkt wird dieser Effekt durch die aufgrund der Geometrie der Reinigungskörper 10, 40 bedingten sehr hohen Fließgeschwindigkeiten des durch den Reinigungsspalt 44 geleiteten Wassers.

Es kann dabei auch vorgesehen sein, dass die zu reinigenden Kunststoffschnipsel vor dem Zuführen in den Reinigungsspalt und dem Fördern durch den Reinigungsspalt 44 der für das Entfernen von Verunreinigungen eigentlich vorgesehenen Vorrichtung in einer nicht dargestellten Vorreinigungsvorrichtung einer Vorreinigung unterzogen werden, wie dies oben erläutert wurde.

## Patentansprüche

1. Vorrichtung zum Entfernen von Verunreinigungen auf Kunststoffschnipseln (56), umfassend mindestens einen ersten Reinigungskörper (10, 10') mit einer eine erste Reinigungsfläche (12, 12') bildenden zumindest abschnittsweise kegelförmigen und/oder zylindrischen Außenfläche und mindestens einen zweiten Reinigungskörper (40) mit einer eine zweite Reinigungsfläche (42) bildenden zumindest abschnittsweise kegelförmigen und/oder zylindrischen Innenfläche, wobei der zweite Reinigungskörper dazu ausgebildet ist, den ersten Reinigungskörper aufzunehmen, wobei die Reinigungsflächen (12, 12', 42) einander gegenüberliegen und zwischen sich einen Reinigungsspalt (44) begrenzen, weiter umfassend eine Antriebseinrichtung, mit der zumindest einer der Reinigungskörper (10, 10', 40) um seine Längsachse (16) drehbar ist und eine Zuführeinrichtung, mit der Kunststoffschnipsel (56) in den Reinigungsspalt (44) zuführbar sind, wobei die Reinigungsflächen (12, 12', 42) der Reinigungskörper (10, 10', 40) jeweils eine Mehrzahl von sich über ihre Reinigungsflächen (12, 12', 42) erstreckenden Reinigungsrippen (18, 46) aufweisen, wobei zumindest eine Flanke (24, 28) der Reinigungsrippen (18, 46) gegenüber der Hochachse der jeweiligen Reinigungsrippe geneigt oder gekrümmt ist, und wobei zwischen zumindest einigen zueinander benachbarten Reinigungsrippen (18, 46) mehrere quer zur Erstreckungsrichtung der Reinigungsrippen (18, 46) verlaufende Reinigungsstege (20, 48) angeordnet sind, **dadurch gekennzeichnet, dass** die Reinigungsstege (20, 48) des ersten und/oder zweiten Reinigungskörpers (10, 10', 40) in einer Richtung parallel zur Längserstreckung der Reinigungsrippen jeweils rampenartig ansteigen und/oder dass die Reinigungsstege (20, 48) des ersten Reinigungskörpers (10, 10') eine geringere Höhe besitzen als die Reinigungsrippen (18, 46) des ersten Reinigungskörpers (10, 10') und/oder dass die Reinigungsstege (20, 48) des zweiten Reinigungskörpers (40) eine geringere Höhe besitzen als die Reinigungsrippen (18, 46) des zweiten Reinigungskörpers (40).

2. Vorrichtung nach Anspruch 1, **dadurch gekennzeichnet, dass** die geneigten oder gekrümmten Flanken (24, 28) der Reinigungsrippen (18, 46) des ersten und/oder zweiten Reinigungskörpers (10, 10', 40) die bei einer Drehung des mindestens einen Reinigungskörpers (10, 10', 40) vorlaufenden Flanken (24, 28) sind.

3. Vorrichtung nach einem der vorhergehenden Ansprüche, **dadurch gekennzeichnet, dass** die Reinigungskörper (10, 10', 40) derart gestaltet sind, dass eine unterstützende Pumpwirkung erzeugt wird.

4. Vorrichtung nach einem der vorhergehenden Ansprüche, **dadurch gekennzeichnet, dass** die Reinigungsrippen (18, 46) des ersten und/oder zweiten Reinigungskörpers (10, 10', 40) in einer senkrecht zu ihrer Längserstreckung verlaufenden Richtung ein Sägezahnprofil bilden und/oder dass die Reinigungsrippen (18, 46) des ersten und/oder zweiten Reinigungskörpers (10, 10', 40) zumindest im Übergang zwischen ihrer mindestens einen geneigten oder gekrümmten Flanke (24, 28) und ihrer Scheitelfläche (26) abgerundet sind und/oder dass die Reinigungsrippen (18, 46) des ersten und/oder zweiten Reinigungskörpers (10, 10', 40) eine gegenüber ihrer Hochachse (22) senkrechte Scheitelfläche (26) besitzen.

5. Vorrichtung nach einem der vorhergehenden Ansprüche, **dadurch gekennzeichnet, dass** zwischen den Scheitelflächen (26) der Reinigungsrippen (18, 46) der ersten Reinigungsfläche und den Scheitelflächen (26) der Reinigungsrippen (18, 46) der zweiten Reinigungsfläche ein Abstand besteht, der im Wesentlichen der durchschnittlichen Dicke der mittels der Zuführeinrichtung zugeführten Kunststoffschnipsel (56) entspricht.

6. Vorrichtung nach einem der vorhergehenden Ansprüche, **dadurch gekennzeichnet, dass** der erste und/oder zweite Reinigungskörper (10, 10', 40) einteilig ausgebildet ist oder aus mehreren Reinigungskörpersegmenten besteht.

7. Vorrichtung nach einem der vorhergehenden Ansprüche, **dadurch gekennzeichnet, dass** sie weiterhin eine Flüssigkeitszuführeinrichtung aufweist, mit der Flüssigkeit, insbesondere Wasser oder eine wässrige Lösung, in den Reinigungsspalt (44) zuführbar ist.

8. Vorrichtung nach einem der vorhergehenden Ansprüche, **dadurch gekennzeichnet, dass** die Reinigungsstege (20, 48) des ersten und zweiten Reinigungskörpers (10, 10', 40) so angeordnet sind, dass die Reinigungsstege (20, 48) des ersten und zweiten Reinigungskörpers (10, 10', 40) bei einer Drehung des mindestens einen Reinigungskörpers (10, 10', 40) nicht oder nicht dauerhaft in einander direkt gegenüberliegende Positionen gelangen und/oder dass die Reinigungsstege (20, 48) auf der ersten und zweiten Reinigungsfläche jeweils entlang mehrerer Umfangsbahnen auf der jeweiligen Reinigungsfläche angeordnet sind.

9. Vorrichtung nach Anspruch 8, **dadurch gekennzeichnet, dass** die Umfangsbahnen der Reinigungsstege (20, 48) auf der ersten Reinigungsfläche (12, 12') andere Verläufe besitzen als die Umfangsbahnen der Reinigungsstege (20, 48) auf der zweiten Reinigungsfläche (42).

10. Vorrichtung nach einem der Ansprüche 8 oder 9, **dadurch gekennzeichnet, dass** die Reinigungsstege (20, 48) entlang der Umfangsbahnen jeweils zwischen jedem Paar von benachbarten Reinigungsrippen (18, 46) angeordnet sind.

11. Vorrichtung nach einem der Ansprüche 1 bis 9, **dadurch gekennzeichnet, dass** zumindest einige der Umfangsbahnen auf der ersten Reinigungsfläche (12, 12') und der Umfangsbahnen auf der zweiten Reinigungsfläche (42) den gleichen Verlauf besitzen, wobei zumindest die Reinigungsstege (20, 48) entlang der Umfangsbahnen mit gleichem Verlauf jeweils nur zwischen jedem zweiten Paar von benachbarten Reinigungsrippen (18, 46) angeordnet sind.

12. Verfahren zum Entfernen von Verunreinigungen auf Kunststoffschnipseln (56) unter Verwendung einer Vorrichtung nach einem der vorhergehenden Ansprüche, bei dem mindestens ein Reinigungskörper (10, 10', 40) mittels der Antriebseinrichtung um seine Längsachse (16) drehend angetrieben wird, bei dem mittels der Flüssigkeitszuführeinrichtung Flüssigkeit, insbesondere Wasser oder eine wässrige Lösung, in den Reinigungsspalt (44) zugeführt wird, bei dem mittels der Zuführeinrichtung Kunststoffschnipsel (56) in den Reinigungsspalt (44) zugeführt werden und bei dem die Kunststoffschnipsel (56) durch den Reinigungsspalt (44) gefördert werden.

13. Verfahren nach Anspruch 12, **dadurch gekennzeichnet, dass** zu reinigende Kunststoffschnipsel vor dem Zuführen in den Reinigungsspalt (44) und dem Fördern durch den Reinigungsspalt (44) der Vorrichtung in einer Vorreinigungsvorrichtung einer Vorreinigung unterzogen werden, wobei die Vorreinigungsvorrichtung eine erste Reinigungsscheibe mit einer ersten Reinigungsfläche und eine zweite Reinigungsscheibe mit einer zweiten Reinigungsfläche umfasst, wobei die Reinigungsflächen einander gegenüberliegen und zwischen sich einen Reinigungsspalt begrenzen, der größer ist als der Reinigungsspalt (44) der anschließend zum Entfernen von Verunreinigungen auf den Kunststoffschnipseln verwendeten Vorrichtung.

14. Verfahren nach Anspruch 13, **dadurch gekennzeichnet, dass** der Reinigungsspalt der Vorreinigungsvorrichtung durch Einstellung des Abstands der Reinigungsscheiben so gewählt wird, dass im Zuge der Vorreinigung von den Kunststoffschnipseln entfernte Verunreinigungen im Wesentlichen nicht zerstört werden.

15. Verfahren nach Anspruch 12, **dadurch gekennzeichnet, dass** zu reinigende Kunststoffschnipsel vor dem Zuführen in den Reinigungsspalt (44) und dem Fördern durch den Reinigungsspalt (44) der Vorrichtung in einer Vorreinigungsvorrichtung einer Vorreinigung unterzogen werden, wobei die Vorreinigungsvorrichtung einen Reinigungshohlzylinder mit einer ersten Reinigungsfläche an seiner zylindrischen Innenfläche und einen in dem Reinigungshohlzylinder angeordneten Reinigungszylinder mit einer zweiten Reinigungsfläche an seiner zylindrischen Außenfläche umfasst, wobei die Reinigungsflächen zwischen sich einen Reinigungsspalt begrenzen, der größer ist als der Reinigungsspalt (44) der anschließend zum Entfernen von Verunreinigungen auf den Kunststoffschnipseln verwendeten Vorrichtung.

16. Verfahren nach Anspruch 15, **dadurch gekennzeichnet, dass** der Reinigungsspalt der Vorreinigungsvorrichtung durch Einstellung des Abstands zwischen dem Reinigungshohlzylinder und dem Reinigungszylinder so gewählt wird, dass im Zuge der Vorreinigung von den Kunststoffschnipseln entfernte Verunreinigungen im Wesentlichen nicht zerstört werden.

17. Verfahren nach Anspruch 12, **dadurch gekennzeichnet, dass** zu reinigende Kunststoffschnipsel vor dem Zuführen in den Reinigungsspalt (44) und dem Fördern durch den Reinigungsspalt (44) der Vorrichtung in einer Vorreinigungsvorrichtung einer Vorreinigung unterzogen werden, wobei die Vorreinigungsvorrichtung mindestens einen ersten Vorreinigungskörper mit einer eine erste Reinigungsfläche bildenden zumindest abschnittsweise kegelförmigen Außenfläche und mindestens einen zweiten Vorreinigungskörper mit einer eine zweite Reinigungsfläche bildenden zumindest abschnittsweise kegelförmigen Innenfläche umfasst, wobei die Reinigungsflächen zwischen sich einen Reinigungsspalt begrenzen, der größer ist als der Reinigungsspalt (44) der anschließend zum Entfernen von Verunreinigungen auf den Kunststoffschnipseln verwendeten Vorrichtung.

18. Verfahren nach Anspruch 17, **dadurch gekennzeichnet, dass** der Reinigungsspalt der Vorreinigungsvorrichtung durch Einstellung des Abstands zwischen dem ersten Vorreinigungskörper und dem zweiten Vorreinigungskörper so gewählt wird, dass im Zuge der Vorreinigung von den Kunststoffschnipseln entfernte Verunreinigungen im Wesentlichen nicht zerstört werden.

19. Verfahren nach einem der Ansprüche 14, 16 oder 18, **dadurch gekennzeichnet, dass** die entfernten Verunreinigungen anschließend mittels Filtration und/oder Siebung aus der Prozessflüssigkeit entfernt werden.

## Claims

1. A device for removing impurities from shredded plastic (56), comprising at least one first cleaning body (10, 10') with a conical and/or cylindrical outer surface at least in sections and forming a first cleaning surface (12, 12') and at least one second cleaning body (40) with a conical and/or cylindrical inner surface at least in sections and forming a second cleaning surface (42), wherein the second cleaning body is designed to receive the first cleaning body, wherein the cleaning surfaces (12, 12', 42) lie opposite each other and delimit amongst themselves a cleaning gap (44), further comprising a drive apparatus, with which at least one of the cleaning bodies (10, 10', 40) is rotatable about its longitudinal axis (16) and a feed apparatus, with which the shredded plastic (56) can be fed into the cleaning gap (44),
wherein
the cleaning surfaces (12, 12', 42) of the cleaning bodies (10, 10', 40) each have a plurality of cleaning fins (18, 46) extending over their cleaning surfaces (12, 12', 42), wherein at least one flank (24, 28) of the cleaning fins (18, 46) is tilted or bent with respect to the vertical axis of the respective cleaning fin and
wherein
several cleaning webs (20, 48) progressing transversely with respect to the extension direction of the cleaning fins (18, 46) are arranged between at least several neighboring cleaning fins (18, 46), **characterized in that** the cleaning webs (20, 48) of the first and/or second cleaning body (10, 10', 40) rise respectively in a ramp-like manner in a direction parallel to the longitudinal extension of the cleaning fins and/or that the cleaning webs (20, 48) of the first cleaning body (10, 10') have a smaller height than the cleaning fins (18, 46) of the first cleaning body (10, 10') and/or that the cleaning webs (20, 48) of the second cleaning body (40) have a smaller height than the cleaning fins (18, 46) of the second cleaning body (40).

2. The device according to claim 1, **characterized in that** the tilted or bent flanks (24, 28) of the cleaning fins (18, 46) of the first and/or second cleaning body (10, 10', 40) are the flanks (24, 28) advancing forward during a rotation of the at least one cleaning body (10, 10', 40).

3. The device according to one of the preceding claims, **characterized in that** the cleaning bodies (10, 10', 40) are designed such that a supporting pump effect is generated.

4. The device according to one of the preceding claims, **characterized in that** the cleaning fins (18, 46) of the first and/or second cleaning body (10, 10', 40) form a sawtooth profile in a direction progressing perpendicular to their longitudinal extension and/or that the cleaning fins (18, 46) of the first and/or second cleaning body (10, 10', 40) are rounded at least in the transition between their at least one tilted or bent flank (24, 28) and their peak surface (26) and/or that the cleaning fins (18, 46) of the first and/or second cleaning body (10, 10', 40) have a peak surface (26) perpendicular to their vertical axis (22).

5. The device according to one of the preceding claims, **characterized in that** there is a distance between the peak surfaces (26) of the cleaning fins (18, 46) of the first cleaning surface and the peak surfaces (26) of the cleaning fins (18, 46) of the second cleaning surface, which mainly corresponds with the average thickness of the shredded plastic (56) fed by means of the feed apparatus.

6. The device according to one of the preceding claims, **characterized in that** the first and/or second cleaning body (10, 10', 40) is designed as one piece or consists of several cleaning body segments.

7. The device according to one of the preceding claims, **characterized in that** it also has a liquid feed apparatus, with which liquid, in particular water or an aqueous solution, can be fed into the cleaning gap (44).

8. The device according to one of the preceding claims, **characterized in that** the cleaning webs (20, 48) of the first and second cleaning body (10, 10', 40) are arranged such that the cleaning webs (20, 48) of the first and second cleaning body (10, 10', 40) do not get into or at least not permanently into directly opposite-lying positions during a rotation of the at least one cleaning body (10, 10', 40) and/or that the cleaning webs (20, 48) on the first and second cleaning surface are respectively arranged along several circumferential tracks on the respective cleaning surface.

9. The device according to claim 8, **characterized in that** the circumferential tracks of the cleaning webs (20, 48) on the first cleaning surface (12, 12') have other progressions than the circumferential tracks of the cleaning webs (20, 48) on the second cleaning surface (42).

10. The device according to one of claims 8 or 9, **characterized in that** the cleaning webs (20, 48) are arranged along the circumferential tracks respectively between each pair of neighboring cleaning fins (18, 46).

11. The device according to one of claims 1 to 9, **characterized in that** at least several of the circumferential tracks on the first cleaning surface (12, 12') and several of the circumferential tracks on the second cleaning surface (42) have the same progression, wherein at least the cleaning webs (20, 48) along the circumferential tracks with the same progression are respectively arranged only between each second pair of neighboring cleanings fins (18, 46).

12. A method for removing impurities from shredded plastic (56) using a device according to one of the preceding claims, in which at least one cleaning body (10, 10', 40) is driven in a rotating manner about its longitudinal axis (16) by means of the drive apparatus, in which liquid, in particular water or an aqueous solution, is fed into the cleaning gap (44) by means of the liquid feed apparatus, in which shredded plastic (56) is fed into the cleaning gap (44) by means of the feed apparatus and in which the shredded plastic (56) is conveyed through the cleaning gap (44).

13. The method according to claim 12, **characterized in that** shredded plastic to be cleaned undergoes a pre-cleaning in a pre-cleaning device before being fed into the cleaning gap (44) and before being conveyed through the cleaning gap (44) of the device, wherein the pre-cleaning device comprises a first cleaning disk with a first cleaning surface and a second cleaning disk with a second cleaning surface, wherein the cleaning surfaces lie opposite each other and delimit amongst each other a cleaning gap, which is larger than the cleaning gap (44) of the device subsequently used to remove impurities from the shredded plastic.

14. The method according to claim 13, **characterized in that** the cleaning gap of the pre-cleaning device is selected by setting the distance of the cleaning disks such that impurities removed from the shredded plastic during the course of the pre-cleaning are mainly not destroyed.

15. The method according to claim 12, **characterized in that** shredded plastic to be cleaned undergoes a pre-cleaning in a pre-cleaning device before being fed into the cleaning gap (44) and before being conveyed through the cleaning gap (44) of the device, wherein the pre-cleaning device comprises a hollow cleaning cylinder with a first cleaning surface on its cylindrical inner surface and a cleaning cylinder arranged in the hollow cleaning cylinder with a second cleaning surface on its cylindrical outer surface, wherein the cleaning surfaces delimit amongst each other a cleaning gap, which is larger than the cleaning gap (44) of the device subsequently used to remove impurities from the shredded plastic.

16. The method according to claim 15, **characterized in that** the cleaning gap of the pre-cleaning device is selected by setting the distance between the hollowing cleaning cylinder and the cleaning cylinder such that impurities removed from the shredded plastic during the course of the pre-cleaning are mainly not destroyed.

17. The method according to claim 12, **characterized in that** shredded plastic to be cleaned undergoes a pre-cleaning in a pre-cleaning device before being fed into the cleaning gap (44) and before being conveyed through the cleaning gap (44) of the device, wherein the pre-cleaning device comprises at least one first pre-cleaning body with a conical outer surface at least in sections forming a first cleaning surface and at least one second pre-cleaning body with a conical inner surface at least in sections forming a second cleaning surface, wherein the cleaning surfaces delimit amongst each other a cleaning gap, which is larger than the cleaning gap (44) of the device subsequently used for removing impurities from the shredded plastic.

18. The method according to claim 17, **characterized in that** the cleaning gap of the pre-cleaning device is selected by setting the distance between the first pre-cleaning body and the second pre-cleaning body such that impurities removed from the shredded plastic during the course of the pre-cleaning are mainly not destroyed.

19. The method according to one of claims 14, 16 or 18, **characterized in that** the removed impurities are subsequently removed from the process liquid by means of filtration and/or sieving.

## Revendications

1. Dispositif pour l'élimination d'impuretés présentes sur des copeaux de matière plastique (56), comportant au moins un premier corps de nettoyage (10, 10') avec une surface extérieure au moins partiellement conique et/ou cylindrique formant une première surface de nettoyage (12, 12') et au moins un deuxième corps de nettoyage (40) avec une surface intérieure au moins partiellement conique et/ou cylindrique formant une deuxième surface de nettoyage (42), le deuxième corps de nettoyage étant conçu pour recevoir le premier corps de nettoyage, les surfaces de nettoyage (12, 12', 42) étant opposées l'une à l'autre et délimitant une fente de nettoyage (44) entre elles, comportant en outre un moyen d'entraînement destiné à faire tourner l'au moins un corps de nettoyage (10, 10', 40) autour de son axe longitudinal (16) et un moyen d'alimentation destiné à alimenter les copeaux de matière plastique (56) vers la fente de nettoyage (44),
dans lequel
les surfaces de nettoyage (12, 12', 42) des corps de nettoyage (10, 10', 40) présentent respectivement une pluralité de nervures de nettoyage (18, 46) s'étendant sur leurs surfaces de nettoyage (12, 12', 42), au moins un flanc (24, 28) des nervures de nettoyage (18, 46) est incliné ou courbé par rapport à l'axe vertical de la nervure de nettoyage respective, et
dans lequel
plusieurs âmes de nettoyage (20, 48) s'étendant transversalement à la direction d'extension des nervures de nettoyage (18, 46) sont disposées entre au moins quelques nervures de nettoyage (18, 46) adjacentes les unes aux autres,
**caractérisé en ce que** les âmes de nettoyage (20, 48) du premier et/ou du deuxième corps de nettoyage (10, 10', 40) montent respectivement comme une rampe dans une direction parallèle à l'étendue longitudinale des nervures de nettoyage et/ou **en ce que** les âmes de nettoyage (20, 48) du premier corps de nettoyage (10, 10') présentent une hauteur inférieure à celle des nervures de nettoyage (18, 46) du premier corps de nettoyage (10, 10') et/ou **en ce que** les âmes de nettoyage (20, 48) du deuxième corps de nettoyage (40) présentent une hauteur inférieure à celle des nervures de nettoyage (18, 46) du deuxième corps de nettoyage (40).

2. Dispositif selon la revendication 1, **caractérisé en ce que** les flancs inclinés ou courbés (24, 28) des nervures de nettoyage (18, 46) du premier et/ou du deuxième corps de nettoyage (10, 10', 40) sont les flancs (24, 28) situés à l'avant lors d'une rotation de l'au moins un corps de nettoyage (10, 10', 40).

3. Dispositif selon l'une des revendications précédentes, **caractérisé en ce que** les corps de nettoyage (10, 10', 40) sont conçus de manière à produire un effet de pompage de soutien.

4. Dispositif selon l'une des revendications précédentes, **caractérisé en ce que** les nervures de nettoyage (18, 46) du premier et/ou du deuxième corps de nettoyage (10, 10', 40) forment un profil en dents de scie dans une direction s'étendant perpendiculairement à leur étendue longitudinale et/ou **en ce que** les nervures de nettoyage (18, 46) du premier et/ou du deuxième corps de nettoyage (10, 10', 40) sont arrondies au moins au niveau de la transition entre leur au moins un flanc incliné ou courbé (24, 28) et leur surface de crête (26) et/ou **en ce que** les nervures de nettoyage (18, 46) du premier et/ou du deuxième corps de nettoyage (10, 10', 40) possèdent une surface de crête (26) perpendiculaire par rapport à leur axe vertical (22).

5. Dispositif selon l'une des revendications précédentes, **caractérisé en ce qu'**un espace correspondant essentiellement à l'épaisseur moyenne des copeaux de matière plastique (56) alimentés par le moyen d'alimentation apparaît entre les surfaces de crête (26) des nervures de nettoyage (18, 46) de la première surface de nettoyage et les surfaces de crête (26) des nervures de nettoyage (18, 46) de la deuxième surface de nettoyage.

6. Dispositif selon l'une des revendications précédentes, **caractérisé en ce que** le premier et/ou le deuxième corps de nettoyage (10, 10', 40) est/sont conçu(s) d'un seul tenant ou constitué(s) de plusieurs segments de corps de nettoyage.

7. Dispositif selon l'une des revendications précédentes, **caractérisé en ce que** celui-ci présente en outre un moyen d'alimentation de liquide destiné à alimenter un liquide, en particulier de l'eau ou une solution aqueuse, vers la fente de nettoyage (44).

8. Dispositif selon l'une des revendications précédentes, **caractérisé en ce que** les âmes de nettoyage (20, 48) du premier et du deuxième corps de nettoyage (10, 10', 40) sont disposées de telle façon que les âmes de nettoyage (20, 48) du premier et du deuxième corps de nettoyage (10, 10', 40) ne parviennent pas ou pas durablement dans des positions directement opposées l'une à l'autre lors d'une rotation de l'au moins un corps de nettoyage (10, 10', 40) et/ou **en ce que** les âmes de nettoyage (20, 48) sur la première et la deuxième surface de nettoyage sont disposées respectivement le long de plusieurs trajets circonférentiels sur la surface de nettoyage respective.

9. Dispositif selon la revendication 8, **caractérisé en ce que** les trajets circonférentiels des âmes de nettoyage (20, 48) sur la première surface de nettoyage (12, 12') présentent d'autres parcours que les trajets circonférentiels des âmes de nettoyage (20, 48) sur la deuxième surface de nettoyage (42).

10. Dispositif selon l'une des revendications 8 ou 9, **caractérisé en ce que** les âmes de nettoyage (20, 48) s'étendant le long des trajets circonférentiels sont disposées respectivement entre chaque paire de nervures de nettoyage (18, 46) adjacentes.

11. Dispositif selon l'une des revendications 1 à 9, **caractérisé en ce qu'**au moins quelques-uns des trajets circonférentiels sur la première surface de nettoyage (12, 12') et des trajets circonférentiels sur la deuxième surface de nettoyage (42) présentent le même parcours, et au moins les âmes de nettoyage (20, 48) présentant le même parcours le long des trajets circonférentiels sont respectivement disposées seulement entre chaque deuxième paire de nervures de nettoyage (18, 46) adjacentes.

12. Procédé pour l'élimination d'impuretés présentes sur des copeaux de matière plastique (56) à l'aide d'un dispositif selon l'une des revendications précédentes, dans lequel au moins un corps de nettoyage (10, 10', 40) est entraîné de façon rotative par le moyen d'entraînement autour de son axe longitudinal (16), dans lequel un liquide, en particulier de l'eau ou une solution aqueuse, est alimenté vers la fente de nettoyage (44) par le moyen d'alimentation de liquide, dans lequel des copeaux de matière plastique (56) sont alimentés vers la fente de nettoyage (44) par le moyen d'alimentation, et dans lequel les copeaux de matière plastique (56) sont guidés à travers la fente de nettoyage (44).

13. Procédé selon la revendication 12, **caractérisé en ce que** des copeaux de matière plastique à nettoyer sont soumis à un pré-nettoyage dans un dispositif de pré-nettoyage avant l'alimentation vers la fente de nettoyage (44) et le guidage à travers la fente de nettoyage (44) du dispositif, le dispositif de pré-nettoyage comportant un premier disque de nettoyage avec une première surface de nettoyage et un deuxième disque de nettoyage avec une deuxième surface de nettoyage, les surfaces de nettoyage étant opposées l'une à l'autre et délimitant une fente de nettoyage entre elles, laquelle est plus grande que la fente de nettoyage (44) du dispositif utilisé par la suite pour l'élimination d'impuretés présentes sur les copeaux de matière plastique.

14. Procédé selon la revendication 13, **caractérisé en ce que** la fente de nettoyage du dispositif de pré-nettoyage est sélectionnée en réglant l'espace entre les disques de nettoyage, de manière à ne quasiment pas détruire les impuretés éliminées sur les copeaux de matière plastique au cours du pré-nettoyage.

15. Procédé selon la revendication 12, **caractérisé en ce que** des copeaux de matière plastique à nettoyer sont soumis à un pré-nettoyage dans un dispositif de pré-nettoyage avant l'alimentation vers la fente de nettoyage (44) et le guidage à travers la fente de nettoyage (44) du dispositif, le dispositif de pré-nettoyage comportant un cylindre creux de nettoyage avec une première surface de nettoyage sur sa surface intérieure cylindrique et un cylindre de nettoyage disposé dans le cylindre creux de nettoyage avec une deuxième surface de nettoyage sur sa surface extérieure cylindrique, les surfaces de nettoyage délimitant une fente de nettoyage entre elles, laquelle est plus grande que la fente de nettoyage (44) du dispositif utilisé par la suite pour l'élimination d'impuretés sur les copeaux de matière plastique.

16. Procédé selon la revendication 15, **caractérisé en ce que** la fente de nettoyage du dispositif de pré-nettoyage est sélectionnée en réglant l'espace entre le cylindre creux de nettoyage et le cylindre de nettoyage, de manière à ne quasiment pas détruire les impuretés éliminées sur les copeaux de matière plastique au cours du pré-nettoyage.

17. Procédé selon la revendication 12, **caractérisé en ce que** des copeaux de matière plastique à nettoyer sont soumis à un pré-nettoyage dans un dispositif de pré-nettoyage avant l'alimentation vers la fente de nettoyage (44) et le guidage à travers la fente de nettoyage (44) du dispositif, le dispositif de pré-nettoyage comportant au moins un premier corps de pré-nettoyage avec une surface extérieure au moins partiellement conique formant une première surface de nettoyage et au moins un deuxième corps de pré-nettoyage avec une surface intérieure au moins partiellement conique formant une deuxième surface de nettoyage, les surfaces de nettoyage délimitant une fente de nettoyage entre elles, laquelle est plus grande que la fente de nettoyage (44) du dispositif utilisé par la suite pour l'élimination d'impuretés présentes sur les copeaux de matière plastique.

18. Procédé selon la revendication 17, **caractérisé en ce que** la fente de nettoyage du dispositif de pré-nettoyage est sélectionnée en réglant l'espace entre le premier corps de pré-nettoyage et le deuxième corps de pré-nettoyage, de manière à ne quasiment pas détruire les impuretés éliminées sur les copeaux de matière plastique au cours du pré-nettoyage.

19. Procédé selon l'une des revendications 14, 16 ou 18, **caractérisé en ce que** les impuretés éliminées sont ensuite éliminées du liquide de traitement par filtration et/ou tamisage.
